# EUROPÄISCHE PATENTANMELDUNG

(11) **EP 2 608 388 A1**
(43) Veröffentlichungstag der Anmeldung: **26.06.2013**
(21) Anmeldenummer: 11194181.1
(22) Anmeldetag: 19.12.2011
(51) Int. Cl.: H02M 7/49

(54) **Modularer Hochfrequenz-Umrichter**

(71) Anmelder: Siemens Aktiengesellschaft, 80333 München (DE)
(72) Erfinder: Weis, Benno, 91334 Hemhofen (DE)

(57) **Zusammenfassung**

Die Erfindung betrifft eine Stromrichterschaltung (4), die wenigstens zwei Submodule (22) in Reihenschaltung, die über eine Induktivität (20) elektrische Leistung aus einer eine Gleichspannung (16) abgebenden Leistungsquelle (8) bezieht, umfasst. Dabei weist jedes Submodul (22) eingangsseitig eine einphasige Halbbrücke (34) und lastseitig eine einphasige Vollbrücke (36) auf und die Halbbrücke (34) und die Vollbrücke (36) sind gleichspannungsseitig sowie parallel hierzu ein Zwischenkreiskondensator (38) geschaltet. Erfindungsgemäß ist zum Zwischenkreiskondensator (38) parallel geschaltet ein Zusatzkondensator (40) in jedem Submodul (22) vorhanden.

## Beschreibung

Die Erfindung betrifft eine Stromrichterschaltung gemäß dem Oberbegriff des Anspruchs 1 und einen Elektromotor mit der Stromrichterschaltung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, in jedem Submodul der eingangs genannten Stromrichterschaltung einen Zusatzkondensator parallel zum Zwischenkreiskondensator zu schalten.

Der Vorschlag geht von der Erkenntnis aus, dass die Zwischenkreiskondensatoren in jedem Submodul mit einer hohen Speicherkapazität dimensioniert sein sollten, um mit der Stromrichterschaltung der eingangs genannten Art auch Blindleistung aufnehmende elektrische Verbraucher betreiben zu können. Da die Richtung der Leistungsflüsse durch die Submodule aufgrund der Reihenschaltung der Submodule fest vorgegeben ist, kann ein Blindleistungsaustausch zu den elektrischen Lasten des elektrischen Verbrauchers nur zwischen dem Zwischenkreiskondensator und den elektrischen Lasten und nicht zwischen der elektrischen Leistungsquelle und den elektrischen Lasten stattfinden.

Der Erfindung liegt jedoch die Überlegung zugrunde, dass der Zwischenkreiskondensator nicht beliebig dimensionierbar ist, da er in der Stromrichterschaltung bestimmten technischen Einschränkungen unterliegt. So ist der Zwischenkreiskondensator bestimmten geometrischen Beschränkungen unterworfen und muss temperaturfest sein. Auf diese Weise ist der Zwischenkreiskondensator niederinduktiv an die Halbbrücke beziehungsweise Vollbrücke angeschlossen, so dass er Überspannungen an den Halbleitern reduzieren kann.

Um die Kapazität des Zwischenkreiskondensators unabhängig von diesen technischen Einschränkungen zu erhöhen, schlägt die Erfindung vor, zum Zwischenkreiskondensator parallel einen Zusatzkondensator zu schalten, der dann an bestimmten Stellen in der Stromrichterschaltung angeordnet werden kann, die nicht den technischen Einschränkungen unterliegen.

Die Erfindung gibt daher eine Stromrichterschaltung an, die wenigstens zwei Submodule in Reihenschaltung, die über eine Induktivität elektrische Leistung aus einer eine Gleichspannung abgebenden Leistungsquelle bezieht, umfasst. Dabei weist jedes Submodul eingangsseitig eine einphasige Halbbrücke und lastseitig eine einphasige Vollbrücke auf und die Halbbrücke und die Vollbrücke sind gleichspannungsseitig sowie parallel hierzu ein Zwischenkreiskondensator geschaltet. Jedes Submodul weist einen zum Zwischenkreiskondensator parallel geschalteten Zusatzkondensator auf.

Durch den Zusatzkondensator kann die Speicherkapazität für elektrische Energie der einzelnen Submodule individuell erhöht werden, so dass die angegebene Stromrichterschaltung zur Abgabe einer größeren Blindleistung an einen elektrischen Verbraucher geeignet ist. Auf diese Weise kann die angegebene Stromrichterschaltung vielseitiger eingesetzt werden.

In einer Weiterbildung der Erfindung ist lastseitig an die Vollbrücke jedes Submoduls eine elektrische Last angeschlossen, wobei der Zusatzkondensator und die elektrische Last in jedem Submodul einen vorbestimmten räumlichen Abstand zueinander aufweisen. Durch den räumlichen Abstand kann vermieden werden, dass der Zusatzkondensator in jedem Submodul durch die elektrische Last erwärmt wird.

In einer zusätzlichen Weiterbildung ist der Zusatzkondensator in jedem Submodul ein Elektrolytkondensator. Elektrolytkondensatoren sind besonders große jedoch temperaturempfindliche elektrische Energiespeicher. Durch die Erfindung kann der als Elektrolytkondensator ausgebildete Zusatzkondensator an einer Stelle in der Stromrichterschaltung angeordnet werden, an der er von den Wärmequellen weitestgehend thermisch entkoppelt ist.

In einer anderen Weiterbildung ist der Zwischenkreiskondensator ein Keramikkondensator, der besonders platzsparend und temperaturresistent innerhalb der Submodule der Stromrichterschaltung verschaltet werden kann.

Die Erfindung gibt auch einen Elektromotor für ein Fahrzeug an, wobei der Elektromotor mehrere Motorwicklungen und eine angegebene Stromrichterschaltung mit einer der Anzahl der Motorwicklungen entsprechenden Anzahl an Submodulen umfasst. Dabei ist jedes Submodul ausgangsseitig an eine Motorwicklung angeschlossen. Die angegebene Stromrichterschaltung sollte zum Einsparen von Motorleitungen möglichst lokal am Fahrzeugmotor angeordnet werden. Eine Erwärmung des Zusatzkondensators durch eine Erwärmung des Fahrzeugmotors kann durch eine motorferne Anordnung des Zusatz kondensators erreicht werden, ohne dass sämtliche Komponenten der Stromrichterschaltung motorfern angeordnet werden müssten.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- FIG 1: eine Schaltung mit einem beispielhaften modularen Umrichter und
- FIG 2: ein beispielhaftes Submodul des modularen Umrichters zeigen.

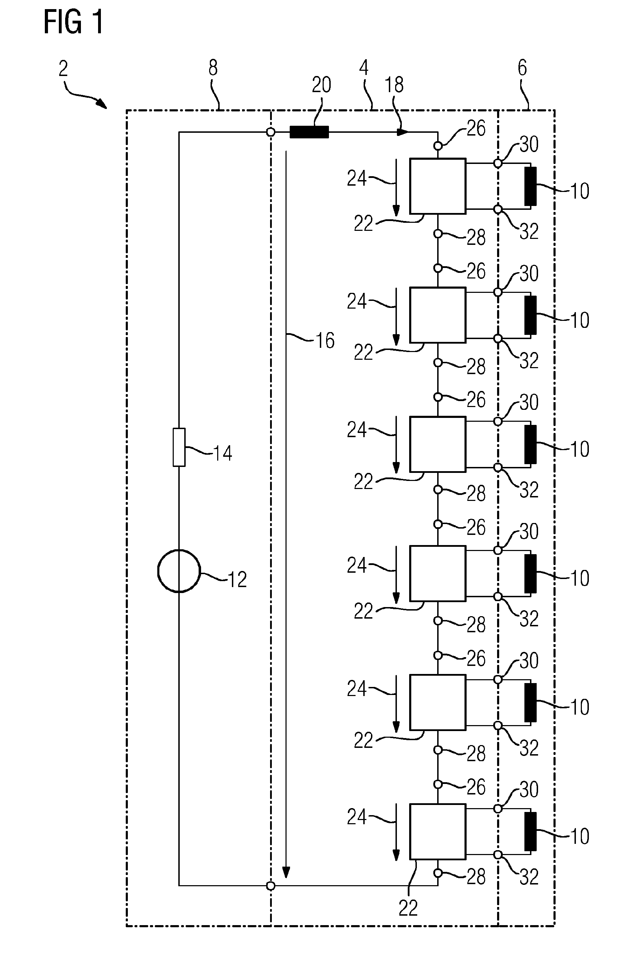

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Elektromotor eines Fahrzeuges ausgebildet und weist sechs elektrische Lasten 10 auf, wobei jede elektrische Last 10 eine Motorwicklung des Elektromotors darstellt.

Die elektrische Leistungsquelle 8 ist in der vorliegenden Ausführung eine Batterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an die Stromrichterschaltung 4 einen Batteriestrom 18 ab.

Die Stromrichterschaltung 4 weist eingangsseitig eine Induktivität 20 auf, die beispielsweise eine Spule sein kann. An diese Induktivität 20 schließt sich in Reihe eine Reihenschaltung aus sechs noch zu beschreibenden Submodulen 22 an. An den einzelnen Submodulen 22 fällt jeweils eine Teilspannung 24 ab. Ferner ist an jedes Submodul 22 jeweils eine elektrische Last 10 angeschlossen. Basierend auf den Teilspannungen 24 versorgen die Submodule 22 auf diese Weise die Lasten 10 mit elektrischer Energie in einer noch zu beschreibenden Weise. Für die Anzahl der Submodule 22 und elektrischen Lasten 10 wurde in der vorliegenden Ausführung sechs gewählt. Die Stromrichterschaltung 4 kann jedoch eine beliebig hohe Anzahl an Submodulen 22 besitzen und damit eine beliebig hohe Anzahl an elektrischen Lasten 10 speisen. Je mehr Submodule 22 jedoch in der Reihenschaltung verschaltet sind, desto kleiner werden die entsprechenden Teilspannungen 24.

Jedes Submodul 22 weist eine erste Eingangsklemme 26, eine zweite Eingangsklemme 28, eine erste Ausgangsklemme 30 und eine zweite Ausgangsklemme 32 auf. Während über den ersten und zweiten Eingangsklemmen 26, 28 jeweils die Teilspannungen 24 abfallen, sind an die ersten und zweiten Ausgangsklemmen 30, 32 die Lasten 10 angeschlossen.

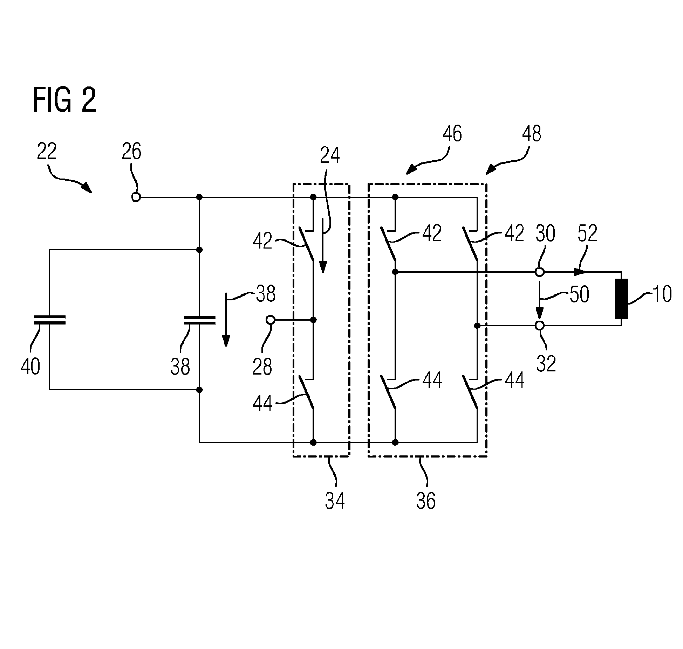

Es wird auf FIG 2 Bezug genommen, die beispielhaft den Aufbau eines der Submodule 22 in dem modularen Umrichter der FIG 1 zeigt. In FIG 2 werden zu FIG 1 gleiche Elemente mit gleichen Bezugszeichen versehen und nicht noch einmal beschrieben.

Das Submodul 22 weist eine Eingangshalbbrücke 34, eine Vollbrücke 36, einen Zwischenkreiskondensator 38 und einen Zusatzkondensator 40 auf, die miteinander parallel verschaltet sind.

Die Eingangshalbbrücke 40 weist einen ersten Schalter 42 und einen dazu in Reihe geschalteten zweiten Schalter 44, zwischen denen die zweite Eingangsklemme 28 angeschlossen ist. Die Schalter können als Leistungshalbleiterschalter, wie beispielsweise MOSFETs (Metalloxid-Feldeffekttransistor) ausgebildet sein.

Die erste Teilspannung 24 ist an den ersten Schalter 42 angelegt, während der zweite Schalter 44 in Reihe zwischen dem ersten Schalter 42 und der Vollbrücke 36 geschaltet ist. Somit kann der erste Schalter 42 aus Sicht der Vollbrücke 36 den Eingang 26, 28 aus der Batterie 8 kurzschließen, während der zweite Schalter 42 (bei geöffnetem ersten Schalter 42) die Vollbrücke 36 in den Strompfad der Batterie 8 legen kann. Werden in jedem Submodul 22 die Schalter 42, 44 in gleicher Weise abwechselnd geöffnet und geschlossen, ist gemeinsam mit der Induktivität 20 ein Hochsetzsteller geschaffen, der die Summe der Teilspannungen 24 höher setzt, als die Batteriespannung 16. Weiterhin kann durch die Eingangshalbbrücke 34 die Vollbrücke 36 auch dauerhaft aus der Reihenschaltung der sechs Submodule 22 entfernt werden, wenn der erste Schalter 42 dauerhaft geschlossen bleibt.

Die Vollbrücke 36 ist als Vierquadrantensteller ausgeführt, der eine erste Wechselrichterhalbbrücke 46 und eine zweite Wechselrichterhalbbrücke 48 aufweist. Beide Wechselrichterhalbbrücken 46, 48 sind analog zur Eingangshalbbrücke 34 aufgebaut, wobei antiparallel zu den Schaltern 42, 44 nicht weiter dargestellte Freilaufdioden geschaltet sein können. Auf eine extra Referenzierung der Schalter 42, 44 wird in FIG 2 der Übersichtlichkeit halber verzichtet. Die Teilspannung 24, die über den Zwischenkreiskondensator 38 und den Zusatzkondensator 40 stabilisiert wird, kann durch eine geeignete Ansteuerung der Vollbrücke 36 in eine Wechselspannung 50 umgewandelt werden. Die Wechselspannung 50 wird an die elektrische Last 10 angelegt und ruft einen entsprechenden Wechselstrom 52 durch die elektrische Last 10 hervor. Gibt die elektrische Last 10 elektrische Energie an die als Vierquadrantensteller ausgeführte Vollbrücke 36 ab, so kann diese den entsprechenden Leistungsfluss zurück in das Submodul 22 leiten.

Im Folgenden wird angenommen, dass die Stromrichterschaltung leistungsgeregelt wird. Das heißt, dass die gesamte an den elektrischen Verbraucher 6 abzugebende elektrische Leistung durch die Stromrichterschaltung 4 eingestellt wird. Da die Batteriespannung 16 nicht beeinflussbar ist, kann die abzugebende elektrische Leistung ausschließlich über den Batteriestrom 18 eingestellt werden. Da dieser aufgrund der Reihenschaltung durch alle Submodule 22 gleichermaßen fließt, nehmen alle Submodule 22 zu jeder Zeit eingangsseitig elektrische Energie auf.

Nimmt ein Submodul 22 von seiner angeschlossenen Last 10 beispielsweise aufgrund eines Blindleistungsflusses zeitweise elektrische Energie auf, so kann diese nicht über den Eingang 26, 28 des Submoduls 22 an die Batterie 8 weitergeleitet, sondern muss im Submodul 22 zwischengespeichert werden. Dazu werden der Zwischenkreiskondensator 38 und der Zusatzkondensator 40 herangezogen.

Der Zwischenkreiskondensator 38 ist dabei als lastnahes Bauelement großen Temperaturschwankungen ausgesetzt und muss daher temperaturresistent ausgestaltet sein. Dazu ist der Zwischenkreiskondensator 38 geeigneter Weise als Keramikkondensator ausgebildet.

Da Keramikkondensatoren für ausreichend große Speicherkapazitäten sehr platzintensiv sind, soll der Zwischenkreiskondensator gerade so viel Kapazität besitzen, dass über eine niederinduktive Verbindung Überspannungen im Zwischenkreis zwischen der Halbbrücke 34 und der Vollbrücke 26 reduziert werden können. Die restliche Kapazität zur Speicherung der lastseitig ankommenden elektrischen Energie, beispielsweise aufgrund eines Blindleistungsflusses wird dann durch den Zusatzkondensator 40 bereitgestellt. Dieser wird als lastfernes Bauelement angeordnet und ist daher weniger starken Temperaturschwankungen unterworfen. Auf diese Weise braucht für den Zusatzkondensator 40 auf die Temperaturabhängigkeit des gewählten Bauelements keine Rücksicht genommen zu werden, so dass auch hochkapazitive Kondensatortypen, wie Elektrolytkondensatoren als Bauelement zum Einsatz kommen können.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Stromrichterschaltung (4), umfassend wenigstens zwei Submodule (22) in Reihenschaltung, die über eine Induktivität (20) elektrische Leistung aus einer eine Gleichspannung (16) abgebenden Leistungsquelle (8) bezieht,
- wobei jedes Submodul (22) eingangsseitig eine einphasige Halbbrücke (34) und lastseitig eine einphasige Vollbrücke (36) aufweist, und
- wobei die Halbbrücke (34) und die Vollbrücke (36) gleichspannungsseitig sowie parallel hierzu ein Zwischenkreiskondensator (38) geschaltet sind,
**gekennzeichnet durch**
- einen zum Zwischenkreiskondensator (38) parallel geschalteten Zusatzkondensator (40).

2. Stromrichterschaltung (4) nach Anspruch 1, **dadurch gekennzeichnet, dass** lastseitig an die Vollbrücke (36) jedes Submoduls (22) eine elektrische Last (10) angeschlossen ist, wobei der Zusatzkondensator (40) und die elektrische Last (10) in jedem Submodul (22) einen vorbestimmten räumlichen Abstand zueinander aufweisen.

3. Stromrichterschaltung (4) nach Anspruch 1 oder 2, wobei der Zusatzkondensator (40) in jedem Submodul (22) ein Elektrolytkondensator ist.

4. Stromrichterschaltung (4) nach einem der vorstehenden Ansprüche, wobei der Zwischenkreiskondensator (38) ein Keramikkondensator ist.

5. Elektromotor für ein Fahrzeug umfassend mehrere Motorwicklungen und eine Stromrichterschaltung (2) nach einem der vorstehenden Ansprüche mit einer der Anzahl der Motorwicklungen entsprechenden Anzahl an Submodulen (22), wobei jedes Submodul (22) ausgangsseitig an eine Motorwicklung angeschlossen ist.
